# FASCICULE DE BREVET EUROPEEN

(11) **EP 0 988 255 B1**
(45) Date de publication et mention de la délivrance du brevet: **18.07.2001**
(21) Numéro de dépôt: 98925341.4
(22) Date de dépôt: 10.06.1998
(51) Int. Cl.: C03B 33/095, B23K 26/00

(54) **PROCEDE DE DECALOTTAGE DE PIECES EN VERRE**
VERFAHREN ZUM ABSCHNEIDEN DER KAPPEN VON GLASGEGENSTÄNDEN
METHOD FOR CRACKING OFF GLASSWARE

(30) Priorité: 11.06.1997 BE 9700505
(43) Date de publication de la demande: 29.03.2000
(73) Titulaire: Cuvelier, Georges, 7110 Houdeng-Goegnies (BE)
(72) Inventeur: Cuvelier, Georges, 7110 Houdeng-Goegnies (BE)
(74) Mandataire: De Vleeschauwer, Natalie
(86) Numéro de dépôt international: BE9800085
(87) Numéro de publication internationale: WO9856722

(56) Documents cités:
- WO-A-92/15534
- DE-A- 2 521 612
- DE-A- 4 305 106
- DE-A- 4 305 107
- DE-A- 4 411 037
- DE-A- 4 434 648
- FR-A- 2 376 828
- US-A- 4 146 380

## Description

La présente invention a pour objet un procédé de décalottage de pièces de verre, en particulier des verres à boire, des vases, etc... c'est-à-dire de tous articles de verrerie ou de cristallerie, au moyen d'un rayon laser.

On connaît un procédé de décalottage utilisant un rayon laser pour échauffer la zone du verre à décalotter, suivi éventuellement d'un contact mécanique avec une pièce froide pour créer une fissure.
Ce procédé de décalottage permet le décalottage de pièces en verre cylindriques et de faible épaisseur. Ce procédé est inapte pour le décalottage de pièces en verre rentrantes, de forme évasées, d'épaisseur importante ou encore riches en plomb, au vu du nombre de verres non correctement décalottés, fissurés ou cassés.
DE-A-4 411 037 décrit un procédé de décalottage de pièces en verre creux, comprenant une phase au cours de laquelle une zone continue comprenant la ligne de découpe souhaitée est chauffée au moyen d'au moins un faisceau de rayons lasers continu et une phase au cours de laquelle cette zone ainsi chauffée est refroidie. Avant ou après la phase de chauffage, une courte entaille d'amorçage est formée, sur la ligne de découpe souhaitée, soit au moyen d'un poinçon, soit au moyen d'un faisceau de rayons lasers focalisé.

L'opération de décalottage est une opération importante en verrerie et en cristallerie, car un décalottage correct permettra de réduire au maximum, le temps nécessaire au flettage du verre, voire permettra d'éviter tout flettage dans certains cas. L'opération de flettage est décrite dans le document BE-A-670504.
La présente invention a pour objet un procédé de décalottage de pièces en verre permettant un décalottage correct de pièces en verre évasées, de pièces en verre rentrantes, de pièces en verre avec des épaisseurs de 2 à 5 mm, voire plus, de pièces en verre riche en plomb. Pour certaines pièces en verre, en particulier pour les pièces de forme simple (par exemple cylindrique ou sensiblement cylindrique) et pour des pièces en verre d'épaisseur inférieure à 2 mm, le procédé suivant l'invention permet d'obtenir un bord décalotté apte à être traité directement dans une station de rebrûlage, c'est-à-dire ne devant pas être fletté.
On a également remarqué que le procédé suivant l'invention permettait pour les pièces devant subir une opération de flettage, un flettage plus rapide et plus aisé.

Le procédé suivant l'invention est un procédé de décalotage de pièces en verre dans lequel on soumet les pièces en verre mise en rotation autour d'un axe à un traitement au moyen d'un rayon laser. Il se caractérise en ce que,
dans une première étape, on soumet une pièce à décalotter en rotation à l'action d'un faisceau de rayons lasers continu ou à des faisceaux de rayons lasers continus
* de manière à définir sur la pièce à décalotter une zone continue touchée par le ou lesdits faisceaux lasers continus, et
* de manière à ce que ledit ou lesdits faisceaux touchent une ou des parties de ladite zone avec une densité de puissance par unité de surface inférieure à 30W/mm², avantageusement moins de 25W/mm², en particulier de 5 à 20 W/mm², et en ce que.
dans une deuxième étape, pendant sensiblement une rotation de la pièce à décalotter ou pendant au moins une rotation de la pièce à décalotter, on soumet la zone qui a été soumise dans la première étape à l'action d'un ou de faisceaux de rayons lasers continus, à l'action d'un faisceau laser pulsé focalisé d'une puissance inférieure à 250W de manière à former une série de points successifs distants l'un de l'autre, ladite série définissant une ligne sensiblement continue dans ladite partie, le décalottage s'effectuant sensiblement le long de ladite ligne.

Par laser focalisé pulsé on entend un laser émettant de façon intermittente un faisceau ou un rayon laser ou émettant un faisceau ou rayon laser dont la puissance varie avec le temps entre une puissance faible, par exemple minimale (en particulier nulle) et une haute puissance, par exemple maximale, pour former sur la pièce en verre en rotation une série de points d'impact au moyen du faisceau ou rayon de forte ou haute puissance, deux points d'impact successifs étant distants l'un de l'autre. Forte puissance ou haute puissance pour le faisceau ou rayon signifie une puissance suffisante pour former une micro perforation dans le verre, ladite micro perforation présentant une profondeur comprise entre 10 et 100µm, de préférence entre 15 et 60 µm, en particulier entre 20 et 50 µm, tandis que faible puissance du faisceau ou rayon laser signifie une puissance au plus suffisante pour chauffer le verre sans ou sensiblement sans perforation du verre (perforation du verre d'une profondeur de moins de 10µm, de préférence de moins de 2 µm, en particulier de moins de 1 µm).
De façon avantageuse, le laser pulsé focalisé forme à la surface (de préférence extérieure) du verre une série d'impacts, défauts ou micro perforations distincts les uns des autres, lesdits impacts, défauts ou micro perforations présentant une profondeur dans le verre comprise entre 15 et 60 µm, la distance séparant deux impacts, défauts ou perforations successifs étant avantageusement supérieure à la profondeur d'un impact, défaut ou perforation, mais est de préférence comprise entre 3 et 20 fois la profondeur, en particulier 4 à 10 fois la profondeur du défaut, impact ou microperforation.
De préférence, dans la première étape, on soumet, pendant au moins 3 rotations, de préférence au moins 5 rotations, en particulier plus de 10 rotations de la pièce à décalotter, la zone à l'action d'un faisceau de rayons lasers continu ou à des faisceaux de rayons lasers continus de manière à ce que lesdits faisceaux touchent ladite zone en une ou des parties avec une densité de puissance par unité de surface inférieure à 25W/mm², en particulier comprise entre 5W/mm² et 20W/mm².

De façon avantageuse, on contrôle la pulsation du ou des faisceaux laser dans la deuxième étape et/ou la vitesse de rotation de la pièce à décalotter, de manière à ce que deux points d'impact successifs du faisceau laser pulsé sont distants l'un de l'autre d'une distance inférieure à 2 mm, de préférence inférieure à 1 mm, en particulier d'une distance comprise entre 10µm et 1 mm, et plus spécifiquement d'une distance comprise entre 100µm et 800µm.

Avantageusement, on contrôle la pulsation du faisceau laser de manière à ce que la fréquence de pulsation est comprise entre 500 et 1500 Hz, en particulier entre 800 et 1200 Hz.

Selon une forme de mise en oeuvre, on soumet dans la première étape une zone de 2 à 8 mm de largeur à l'action d'un ou de faisceaux lasers.

Selon une forme de mise en oeuvre avantageuse, entre la première étape et la deuxième étape, on ne soumet pas pendant une période de temps déterminé, la zone à l'action d'un faisceau laser, cette période de temps correspondant de préférence à au moins 5% de la période de temps pendant laquelle la zone est soumise à l'action d'un faisceau ou de faisceaux lasers dans la première étape.

Selon une forme de réalisation préférentielle de la première étape, on soumet la zone à l'action d'un ou de faisceaux lasers pendant au moins une première et une deuxième périodes de temps distinctes, tandis qu'on ne soumet pas la zone à l'action d'un faisceau laser pendant une période de temps intermédiaire entre les périodes de traitement au moyen d'un ou de faisceaux laser. Avantageusement, la période intermédiaire correspond au moins à 5% de la première période de temps pendant laquelle la zone est soumise à l'action d'un faisceau ou de faisceaux lasers dans la première étape.

Selon une forme de réalisation possible, dans la deuxième étape, on soumet simultanément des parties distinctes de la zone respectivement à l'action d'un faisceau de rayons lasers continu ou à des faisceaux de rayons lasers continus, et à l'action d'un faisceau laser pulsé focalisé, de manière à ce que chaque partie de la zone soit touchée par le faisceau de rayons lasers continu ou les faisceaux de rayons lasers continus, avant d'être touchée par le faisceau laser pulsé focalisé.
Avantageusement, dans la deuxième étape, on soumet simultanément des parties distinctes de la zone respectivement à l'action d'un faisceau de rayons lasers continu ou à des faisceaux de rayons lasers continus, et à l'action d'un faisceau laser pulsé focalisé, de manière à ce que chaque partie de la zone soit touchée par le faisceau de rayons lasers continu ou les faisceaux de rayons lasers continus, au moins 0,05 seconde. de préférence au moins 0,1 seconde, avant d'être touchée par le faisceau laser pulsé focalisé. De façon avantageuse, chaque partie de la zone est touchée par le faisceau de rayons lasers continu ou les faisceaux de rayons lasers continus, au plus 1 seconde, de préférence au plus 0,5 seconde, avant d'être touchée par le faisceau laser pulsé focalisé. En d'autres termes, la période de temps comprise entre le moment de l'impact du faisceau laser continu sur une partie de la zone et le moment de l'impact du faisceau laser pulsé sur ladite partie de la zone est de préférence comprise entre 0,1 et 0,5 seconde.

Dans le procédé suivant l'invention, le faisceau de rayons lasers focalisé pulsé touche la zone en des points avec une densité de puissance de plus de 500W, de préférence plus de 800W, par point d'impact. La puissance du laser pulsé nécessaire pour le procédé dépendra de l'épaisseur du verre.

Dans le procédé selon l'invention, on soumet avantageusement la zone à l'action d'un faisceau de rayons lasers focalisé pulsé, dont on a réglé la fréquence de pulsation de manière à former une serie de points d'impact dans la zone, de moins de 500µm, avantageusement de moins de 250 µm, de préférence de moins de 100µm, en particulier de moins de 50 µm de diamètre.

De façon avantageuse, on utilise dans la première étape un faisceau laser collimaté, dont la puissance est par exemple inférieure à 300W.

L'invention a encore pour objet une installation de décalottage en continu de pièces en verre pour la mise en oeuvre du procédé suivant l'invention, ladite installation comprenant :
* un dispositif comportant un laser pour effectuer une opération de décalottage d'une pièce en verre formant un bord décalotté pour la pièce,
* un dispositif comportant un système d'entraînement pas à pas pour amener successivement les pièces en verre vers le dispositif de décalottage, et
* un système d'entrainement en rotation des pièces en verre autour d'un axe au moins lors de leur opération de décalottage. L'installation selon l'invention se caractérise en ce qu'elle comporte au moins deux lasers, au moins un premier étant apte à émettre un faisceau de rayons lasers continu touchant une ou des parties d'une zone continue de ladite pièce de verre avec une densité de puissance par unité de surface inférieure à 30 W/mm², tandis qu'au moins un deuxième est un laser pulsé apte à-émettre un faisceau laser pulsé focalisé d'une puissance inférieure à 250 W.

Avantageusement, elle comporte au moins un déviateur pour diviser le faisceau de rayons lasers continu sortant du premier laser en au moins en un premier et un deuxième faisceaux distincts. et des moyens pour diriger lesdits premier et deuxième faisceaux distincts respectivement vers une première et une deuxième zone de traitement, de manière à ce qu'une pièce à décalotter soit traitée par le premier faisceau dans la première zone, avant d'être transférée par le système d'entraînement pas à pas vers la deuxième zone où la pièce traitée par le premier faisceau est traitée par le deuxième faisceau. Le déviateur permet également de pouvoir utiliser un laser pour le traitement en parallèle de plusieurs pièces en verre.
Selon une autre forme de réalisation, elle comporte au moins un déviateur pour diviser le faisceau de rayons lasers continu sortant du premier laser en au moins en un premier et un deuxième faisceaux distincts, et des moyens pour diriger lesdits premier et deuxième faisceaux distincts respectivement vers une première et une deuxième zone de traitement, de manière à ce qu'une pièce à décalotter soit traitée par le premier faisceau dans la première zone, avant d'être transférée par le système d'entrainement pas à pas vers la deuxième zone où la pièce traitée par le premier faisceau est traitée par le deuxième faisceau avant d'être traitée par le faisceau de rayon laser pulsé focalisé.
De préférence, l'installation suivant l'invention comporte des moyens pour regler la puissance du laser pulsé, la fréquence de pulsation du rayon laser pulsé, et la vitesse de rotation des pièces en verre à décalotter.
Dans des formes de réalisations possibles, l'installation peut comporter une station de refroidissement et/ou une station de flettage du bord décalotté de la pièce en verre et/ou une station de brûlage du bord décalotté de la pièce en verre.

Enfin l'invention a encore pour objet une pièce en verre présentant un bord décalotté, obtenue par un des procédés précités.

Des exemples de réalisation de procédé de décalottage sont décrits ci-après, avec référence aux dessins ci-annexés. Dans ces dessins,
- la figure 1 montre schématiquement un verre à décalotter ;
- la figure 2 est une vue schématique d'une installation suivant l'invention ;
- la figure 3 est une vue à plus grande échelle et en coupe, montrant l'action du laser pulsé focalisé sur la pièce en verre :
- les figures 4 et 5 sont des graphiques montrant la densité de puissance variable d'un rayon ou faisceau laser au cour du temps pour deux lasers pulsés focalisés différents.

### EXEMPLE 1 (Comparatif)

On a traité des verres à pied cylindrique présentant un bord évasé, un diamètre d'environ 7 cm et une épaisseur d'environ 2 mm au voisinage du bord à décalotter.

On a entraîné en rotation les verres à décalotter à une vitesse comprise entre 142 et 320 tours/minute.
Les verres en rotation ont été traités dans une première étape au moyen d'un faisceau laser sortant d'un collimateur, le diamètre du faisceau étant compris entre 4 et 5,5 mm, tandis que la puissance du faisceau était de 170 W. Lors de cette étape, le bord à décalotter a été chauffé. Cette opération de chauffage au laser a été effectuée en 5 secondes.
Après cette étape de chauffage au laser, les verres ont été soumis à une irradiation continue d'un rayon laser focalisé de puissance de 170 W,.
Les résultats de décalottage obtenus dans cet exemple sont aléatoires et dépendent de la qualité du verre.

### EXEMPLE 2 (Invention)

On a répété l'exemple 1, si ce n'est :
- que la première étape de chauffage a été opérée en deux périodes de 2,5 secondes, séparées l'une de l'autre par une pause de 0,8 seconde au cours de laquelle le verre n'est pas soumis à l'action d'un rayon laser,
- qu'on a soumis les verres chauffés dans la première étape à l'action d'un rayon laser focalisé pulsé, la fréquence de pulsation étant de 999 Hz, et
- qu'entre la première étape de chauffage du verre et l'étape de traitement au rayon laser focalisé pulsé, on ne soumet pas les verres à l'action d'un rayon laser pendant 0,8 seconde.

Les résultats de décalottage des verres obtenus par ce procédé sont excellents, et ce pour des vitesses de rotation des verres de 142 tours/minute, 200 tours/minute et 320 tours/minute. Dans l'étape d'irradiation des verres au moyen du rayon laser pulsé, on crée une série de défauts (points d'impact du rayon laser sur le verre) d'une profondeur de ± 60µm et de moins de 100µm de diamètre, lesdits défauts étant sépares l'un de l'autre d'une distance comprise entre 500µm et 1mm, cette distance dépendant de la vitesse de rotation des verres pour une fréquence déterminée de pulsation du laser.
Grâce à la zone de tension ou de traction créée lors de la première étape de chauffage, un ou des défauts se transforment en une fracture qui se propage alors de défaut en défaut, ou au voisinage des défauts, mais toujours dans ce cas dans la partie à décalotter ou la partie opposée à celle présentant un fond.

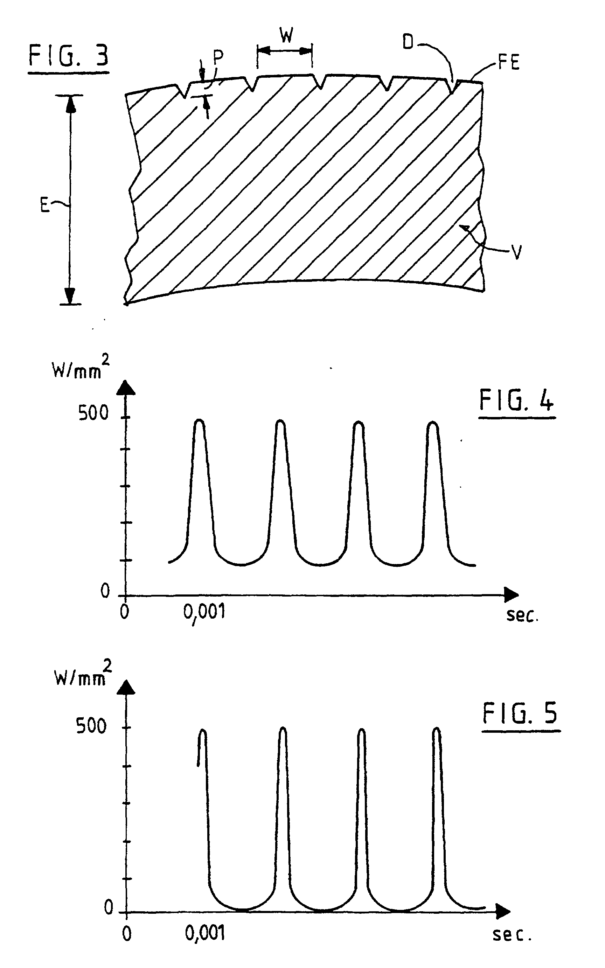

La figure 3 montre à plus grande échelle la série d'impacts ou micro perforations D sur la surface extérieure FE, la profondeur des défauts ou micro perforations ne correspondant qu'à une fraction de l'épaisseur E du verre.

La distance W entre deux impacts ou micro perforations successives est égale à environ 5 fois la profondeur d'une micro perforation.
Les figures 4 et 5 montrent, en fonction du temps, la variation de densité de puissance (W/mm²) d'un rayon ou faisceau émis par deux lasers pulsés et focalisés différents.

### EXEMPLE 3 (invention)

On a répété le procédé de l'exemple 2 si ce n'est que la vitesse de rotation des verres était de 256 tours/minute et que l'on a traité des verres rentrants (du type à cognac).

Les résultats de décalottage sont excellents d'un point de vue qualité et quantité (pas de perte sur un test de 34 verres).

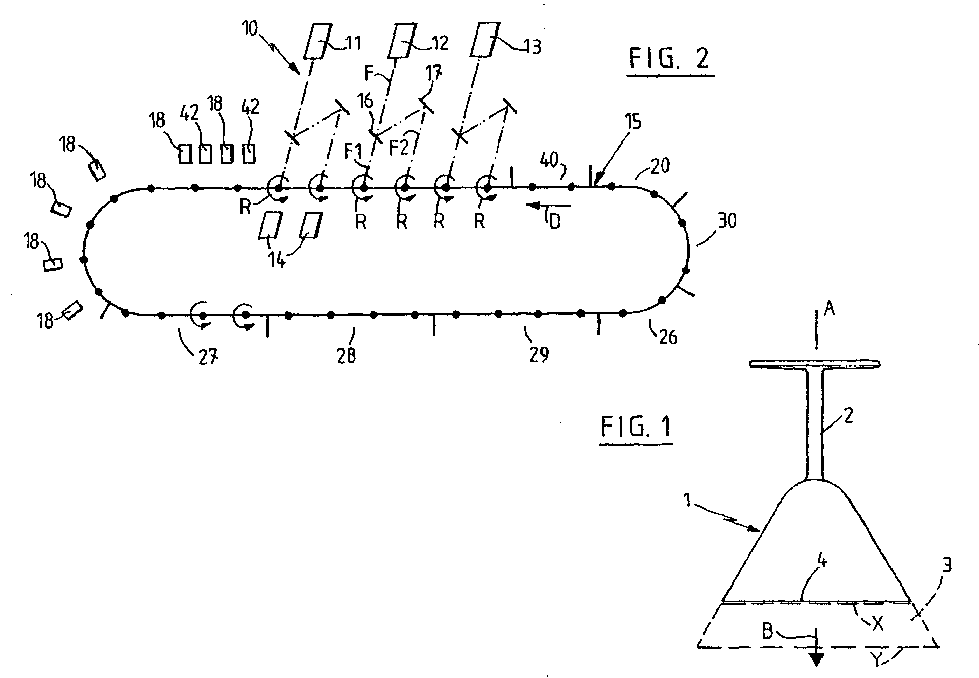

La figure 1 montre schématiquement un verre décalotté obtenu dans cet exemple. Le verre évasé 1 est porté par son pied 2 (verre tourné vers le bas) lors du traitement. Lors du décalottage, la partie 3 tournée vers le bas B se détache du verre. Cette partie 3 s'étend entre deux extrémités ouvertes X, Y. Lors du décalottage, le verre et la partie 3 sont entraînés en rotation autour de leur axe de symétrie A. Le bord 4 du verre décalotté 1 correspond sensiblement à la ligne des points d'impact du rayon laser pulsé. Les aspérités que présentent ce bord ont une hauteur réduite, de sorte qu'un flettage peu important est nécessaire pour obtenir un verre avec un bord supérieur partait. Lors du flettage du verre, on a remarqué que le flettage était plus aisé.

### EXEMPLE 4 (invention)

On a traité des verres à pied dont le bord supérieur circulaire a une épaisseur de 2,5mm et un diamètre de 90 mm.

Le traitement des verres a été le suivant:
- vitesse de rotation des verres de 192 tours/minute
- premier traitement du bord au moyen d'un faisceau laser colimaté de 5mm de diamètre d'une puissance de 170 W, pendant 3, 8 s
- pause pendant 0,8 s
- deuxième traitement du bord au moyen d'un faisceau laser colimaté de 5mm de diamètre d'une puissance de 170 W, pendant 3,8 s
- pause pendant 0,8 s
- traitement du bord au moyen d'un faisceau laser focalisé et pulsé, d'une puissance de 170 W et d'une fréquence de pulsation de 999Hz.

Tous les verres traités ont été correctement décalottés.

Une installation pour la mise en oeuvre du procédé des exemples 2 et 3 est décrite dans la figure 2 ci-jointe.

Cette installation comprend :
* un dispositif 10 comportant des lasers 11,12,13,14 pour effectuer l'opération de décalottage d'une pièce en verre formant un bord décalotté pour la pièce,
* une bande transporteuse 15 comportant un système d'entraînement pas à pas à double indexage pour amener (flèche D) successivement les pièces en verre vers le dispositif de décalottage 10, ladite bande 15 portant les verres par leur pied, et
* un système (non montré) d'entraînement en rotation (flèche R) des pièces en verre autour d'un axe au moins lors de leur opération de décalottage. L'installation selon l'invention comporte plusieurs lasers, des lasers 11,12,13 produisant un faisceau de rayons lasers continus, tandis que les lasers 14 produisent un faisceau laser pulsé focalisé.
Les lasers 11,12,13 sont associés chacun à un déviateur 16 pour diviser le faisceau F de rayon laser continu sortant du laser en au moins en un premier et un deuxième faisceaux distincts F1, F2, et des moyens 17 pour diriger lesdits premier et deuxième faisceaux distincts F1, F2 respectivement vers une première pièce et une deuxième pièce.

De préférence, l'installation suivant l'invention peut comporter en outre des moyens pour régler la puissance du laser pulsé, pour régler la position du rayon laser pulsé, la fréquence de pulsation du rayon laser pulsé, la vitesse de rotation des pièces en verre à décalotter, des moyens pour diriger le rayon laser pulsé dans un plan autre qu'un plan perpendiculaire à l'axe de rotation ou de symétrie de la pièce en verre.
Dans l'installation représentée, une zone des pièces en verre à décalotter est d'abord chauffée par le laser 13, ensuite transférée vers la zone d'action du laser 12, enfin traitée par le laser 12. Par après, la pièce est transférée dans la zone d'action des lasers 11 et 14.

Les pièces une fois décalottées sont soumises à un refroidissement par un ou plusieurs injecteurs d'air 18. Les pièces refroidies passent ensuite dans :
- une section de flettage ou de meulage 27 du bord des verres décalottés
- une section de lavage et de chanfreinage 28
- une section de lavage 29 et de meulage, et
- une section d'essorage 26.

L'installation montrée à la figure 2 est une installation à double indexage, c'est-à-dire avec traitement en parallèle de deux verres. L'installation aurait pu dans des formes de réalisation être à simple indexage, à triple indexage, etc.
Les lasers de chauffage peuvent avoir une puissance nominale de 500 W, voire plus. Le rayon sortant alors de ce laser est divisé en plusieurs sous faisceaux de puissance inférieure à 250 W. Les lasers pulsés ont avantageusement une puissance de l'ordre de 50 W, pour obtenir une densité de puissance au point d'impact de 1000W.

Le procédé selon l'invention et son installation permettent de traiter des verres de table de provenance diverse, à savoir :
* verre sodo-calcique, cristal au plomb, verre au baryum....
* verre soufflé bouche dans des unités de productions manuelles;
* verre soufflé automatiquement sur des machines soufflé-soufflé ou pressé-soufflé:
* verre pressé:
* verres de formes diverses et complexes (cylindriques, évasés, rentrants, circulaires, polygonaux, ...): etc.

L'installation suivant l'invention permet de faire varier la cadence de production de quelques pièces à la minute à 90 pièces à la minute, voire plus.

Le procédé suivant l'invention permet d'éviter tout contact mécanique lors de l'opération de décalottage.

## Revendications

1. Procédé de décalottage d'une pièce en verre (1) dans lequel la pièce en verre (1), mise en rotation autour d'un axe (A), est soumise,
dans une première étape, à l'action d'un faisceau de rayons lasers continu ou à des faisceaux de rayons lasers continus, de manière à définir sur la pièce à décalotter une zone continue touchée par le ou lesdits faisceaux lasers continus, et
dans une deuxième étape, on soumet la zone qui a été soumise dans la première étape à l'action d'un ou de faisceaux de rayons lasers continus, à l'action d'au moins un faisceau laser pulsé focalisé,
caractérisé en ce que
dans la première étape, ledit ou lesdits faisceaux de rayons lasers continus touchent une partie ou des parties de ladite zone avec une densité de puissance par unité de surface inférieure à 30 W/mm², et en ce que,
dans la deuxième étape, pendant sensiblement une rotation de la pièce (1) à décalotter ou pendant au moins une rotation de la pièce (1) à décalotter, on soumet la zone qui a été soumise dans la première étape à l'action d'un ou de faisceaux de rayons lasers continus, à l'action d'au moins un faisceau laser pulsé focalisé d'une puissance inférieure à 250W de manière à former une série de points d'impact successifs distants l'un de l'autre, ladite série définissant une ligne sensiblement continue dans ladite partie, le décalottage s'effectuant sensiblement le long de ladite ligne.

2. Procédé suivant la revendication 1, caractérisé en ce qu'on contrôle la pulsation du faisceau laser dans la deuxième étape et/ou la vitesse de rotation de la pièce (1) à décalotter, de manière à ce que deux points d'impact successifs du ou des faisceaux pulsés sont distants l'un de l'autre d'une distance inférieure à 2 mm, de préférence inférieure à 1 mm.

3. Procédé suivant la revendication 1, caractérisé en ce qu'on contrôle la pulsation du ou des faisceaux lasers pulsés dans la deuxième étape et/ou la vitesse de rotation de la pièce (1) à décalotter, de manière à ce que deux points d'impact successifs du ou des faisceaux sur la pièce (1) à décalottter sont distants l'un de l'autre d'une distance comprise entre 10 µm et 1 mm, de préférence entre 100 µm et 800 µm.

4. Procédé suivant l'une des revendications 1 à 3, caractérisé en ce que, dans la première étape, pendant au moins 3 rotations, de préférence au moins 5 rotations de la pièce (1) à décalotter, on soumet la zone à l'action d'un faisceau de rayons lasers continu ou à des faisceaux de rayons lasers continus de manière à ce que lesdits faisceaux touchent ladite zone en une ou des parties avec une densité de puissance par unité de surface inférieure à 25 W/mm².

5. Procédé suivant l'une des revendications 1 à 4, caractérisé en ce que, dans la première étape, pendant au moins 3 rotations, de préférence au moins 5 rotations de la pièce à décalotter, on soumet la zone à l'action d'un faisceau de rayons lasers continu ou à des faisceaux de rayons lasers continus de manière à ce que lesdits faisceaux touchent ladite zone en une ou des parties avec une densité de puissance par unité de surface comprise entre 5 W/mm² et 20 W/mm².

6. Procédé suivant l'une quelconque des revendications 1 à 5, caractérisé en ce que, dans la deuxième étape, on contrôle la pulsation du faisceau laser de manière à ce que la fréquence de pulsation soit comprise entre 500 et 1500 Hz, en particulier entre 800 et 1200 Hz.

7. Procédé suivant l'une quelconque des revendications 1 à 6, caractérisé en ce que, dans la première étape, on soumet une zone de 2 à 8 mm de largeur à l'action d'un ou de faisceaux lasers.

8. Procédé suivant l'une quelconque des revendications 1 à 7, caractérisé en ce qu'entre la première étape et la deuxième étape, on ne soumet pas pendant une période de temps déterminé, la zone à l'action d'un faisceau laser.

9. Procédé suivant la revendication 8, caractérisé en ce qu'entre la première étape et la deuxième étape, on ne soumet pas la zone à l'action d'un faisceau laser pendant une période de temps correspondant au moins à 5% de la période de temps pendant laquelle la zone est soumise à l'action d'un faisceau ou de faisceaux lasers dans la première étape.

10. Procédé suivant l'une quelconque des revendications 1 à 9, caractérisé en ce que dans la première étape, on soumet la zone à l'action d'un ou de faisceaux lasers pendant au moins une première et une deuxième périodes de temps distinctes, et en ce qu'on ne soumet pas la zone à l'action d'un faisceau laser pendant une période de temps intermédiaire entre les périodes de traitement au moyen d'un ou de faisceaux laser.

11. Procédé suivant la revendication 10, caractérisé en ce que la période intermédiaire correspond au moins à 5% de la première période de temps pendant laquelle la zone est soumise à l'action d'un faisceau ou de faisceaux lasers dans la première étape.

12. Procédé suivant l'une des revendications 1 à 11, caractérisé en ce que dans la deuxième étape, on soumet simultanément des parties distinctes de la zone respectivement à l'action d'un faisceau de rayons lasers continu ou à des faisceaux de rayons lasers continus, et à l'action d'un faisceau laser pulsé focalisé, de manière à ce que chaque partie de la zone soit touchée par le faisceau de rayons lasers continu ou les faisceaux de rayons lasers continus, avant d'être touchée par le faisceau laser pulsé focalisé.

13. Procédé suivant la revendication 12, caractérisé en ce que dans la deuxième étape, on soumet simultanément des parties distinctes de la zone respectivement à l'action d'un faisceau de rayons lasers continu ou à des faisceaux de rayons lasers continus, et à l'action d'un faisceau laser pulsé focalisé, de manière à ce que chaque partie de la zone soit touchée par le faisceau de rayons lasers continus ou les faisceaux de rayons lasers continus, au moins 0,05 seconde, de préférence au moins 0,1 seconde, avant d'être touchée par le faisceau laser pulsé focalisé.

14. Procédé suivant l'une des revendications 1 à 13, caractérisé en ce que le faisceau de rayons lasers focalisé pulsé touche la zone en des points avec une densité de puissance de plus de 500 W, de préférence plus de 800 W, par point d'impact.

15. Procédé suivant l'une quelconque des revendications 1 à 14, caractérisé en ce qu'on soumet la zone à l'action d'un faisceau de rayons lasers focalisé pulsé, et en ce qu'on règle la fréquence de pulsation du faisceau laser de manière à former une série de points d'impact dans la zone, de moins de 100 µm, de préférence de moins de 50 µm de diamètre.

16. Procédé suivant l'une quelconque des revendications 1 à 15, caractérisé en ce que dans la première étape, on soumet la pièce à décalotter à l'action d'au moins un faisceau de rayons lasers continu collimaté.

17. Installation de décalottage en continu de pièces en verre pour la mise en oeuvre du procédé suivant l'une quelconque des revendications 1 à 16, ladite installation comprenant
* un dispositif comportant un laser pour effectuer une opération de décalottage d'une pièce en verre formant un bord décalotté pour la pièce,
* un dispositif comportant un système d'entraînement pas à pas pour amener successivement les pièces en verre (1) vers le dispositif de décalottage (10), et
* un système d'entraînement en rotation des pièces en verre (1) autour d'un axe (A) au moins lors de leur opération de décalottage,
caractérisée en ce qu'elle comporte au moins deux lasers, au moins un premier (11,12,13) étant apte à émettre un faisceau de rayons lasers continu touchant une ou des parties d'une zone continue de ladite pièce de verre (1) avec une densité de puissance par unité de surface inférieure à 30 W/mm², tandis qu'au moins un deuxième est un laser (14) pulsé apte à émettre un faisceau laser pulsé focalisé d'une puissance inférieure à 250 W.

18. Installation suivant la revendication 17, caractérisée en ce qu'elle comporte au moins un déviateur (16) pour diviser le faisceau de rayons lasers continu sortant d'un premier laser en au moins un premier et un deuxième faisceaux distincts (F₁, F₂), et des moyens (17) pour diriger lesdits premier et deuxième faisceaux distincts (F₁, F₂) respectivement vers une première et une deuxième zone de traitement, de manière à ce qu'une pièce (1) à décalotter soit traitée par le premier faisceau (F₁) dans la première zone, avant d'être transférée par le système d'entraînement pas à pas vers la deuxième zone où la pièce traitée par le premier faisceau (F₁) est traitée par le deuxième faisceau (F₂).

19. Installation suivant la revendication 17, caractérisée en ce qu'elle comporte au moins un déviateur (16) pour diviser le faisceau de rayons, lasers, continu sortant d'un premier laser en au moins un premier et un deuxième faisceaux distincts (F₁, F₂), et des moyens (17) pour diriger lesdits premier et deuxième faisceaux distincts respectivement vers une première et une deuxième zone de traitement, de manière à ce qu'une pièce (1) à décalotter soit traitée par le premier faisceau (F₁) dans la première zone, avant d'être transférée par le système d'entraînement pas à pas vers la deuxième zone où la pièce traitée par le premier faisceau (F₁) est traitée par le deuxième faisceau (F₂) avant d'être traitée par le faisceau de rayons lasers pulsé focalisé.

20. Installation suivant l'une des revendications 17 à 19, caractérisée en ce qu'elle comporte des moyens pour régler la puissance du laser pulsé, la fréquence de pulsation du rayon laser pulsé, et la vitesse de rotation des pièces en verre (1) à décalotter.

21. Installation suivant l'une des revendications 17 à 20, caractérisée en ce qu'elle comporte une station de refroidissement (18) des pièces en verre (1) décalottées.

22. Installation suivant l'une des revendications 17 à 21, caractérisée en ce qu'elle comporte une station de flettage (27) du bord décalotté (4) de la pièce en verre (1).

23. Installation suivant la revendication 22, caractérisée en ce qu'elle comporte en outre une station de brûlage du bord décalotté de la pièce en verre.

24. Pièce en verre (1) présentant un bord décalotté (4), obtenue par le procédé suivant l'une quelconque des revendications 1 à 16.

## Claims

1. Method for cracking off a glass article (1) in which the glass article (1), rotating about an axis (A), is subjected,
in a first step, to the action of a continuous beam of laser rays or to continuous beams of laser rays, so as to define, on the article to be cracked off, a continuous region touched by the said continuous laser beam or beams, and
in a second step, the region which was subjected in the first step to the action of one or more continuous beams of laser rays is subjected to the action of at least one focused pulsed laser beam,
characterised in that
in the first step, the said continuous beam or beams of laser rays touch a part or parts of the said region with a power density per unit area of less than 30 W/mm² and in that,
in the second step, during approximately one rotation of the article (1) to be cracked off or during at least one rotation of the article (1) to be cracked off, the region which was subjected in the first step to the action of one or more continuous beams of laser rays is subjected to the action of at least one focused pulsed laser beam having a power of less than 250 W so as to form a series of successive points of impact separated from each other, the said series defining a substantially continuous line in the said part, the crack-off taking place approximately along the said line.

2. Method according to Claim 1, characterized in that the pulsation of the laser beam in the second step and/or the speed of rotation of the article (1) to be cracked off are controlled so that two successive points of impact of the pulsed beam or beams are separated from each other by a distance of less than 2 mm, preferably less than 1 mm.

3. Method according to Claim 1, characterized in that the pulsation of the pulsed laser beam or beams in the second step and/or the speed of rotation of the article (1) to be cracked off are controlled so that two successive points of impact of the beam or beams on the article (1) to be cracked off are separated from each other by a distance of between 10 µm and 1 mm, preferably between 100 µm and 800 µm.

4. Process according to one of Claims 1 to 3, characterized in that, in the first step, during at least 3 rotations and preferably at least 5 rotations of the article (1) to be cracked off, the region is subjected. to the action of a continuous beam of laser rays or to continuous beams of laser rays so that the said beams touch the said region at one or more parts with a power density per unit area of less than 25 W/mm².

5. Method according to one of Claims 1 to 4, characterized in that, in the first step, during at least 3 rotations and preferably at least 5 rotations of the article to be cracked off, the region is subjected to the action of a continuous beam of laser rays or to continuous beams of laser rays so that the said beams touch the said region at one or more parts with a power density per unit area of between 5 W/mm² and 20 W/mm².

6. Method according to any one of Claims 1 to 5, characterized in that, in the second step, the pulsation of the laser beam is controlled so that the pulse frequency is between 500 and 1500 Hz, particularly between 800 and 1200 Hz.

7. Method according to any one of Claims 1 to 6, characterized in that, in the first step, a region of from 2 to 8 mm in width is subjected to the action of one or more laser beams.

8. Method according to any one of Claims 1 to 7, characterized in that, between the first step and the second step, the region is not subjected to the action of a laser beam during a defined time period.

9. Method according to Claim 8, characterized in that, between the first step and the second step, the region is not subjected to the action of a laser beam during a time period corresponding to at least 5% of the time period during which the region is subjected to the action of a laser beam or beams in the first step.

10. Method according to any one of Claims 1 to 9, characterized in that, in the first step, the region is subjected to the action of one or more laser beams during at least a first and a second time period, these being separate from each other, and in that the region is not subjected to the action of a laser beam during an intermediate time period between the periods of treatment by means of one or more laser beams.

11. Method according Claim 10, characterized in that the intermediate period corresponds to at least 5% of the first time period during which the region is subjected to the action of a laser beam or beams in the first step.

12. Method according to one of Claims 1 to 11, characterized in that, in the second step, separate parts of the region are simultaneously subjected to the action of a continuous beam of laser rays or to continuous beams of laser rays and to the action of a focused pulsed laser beam respectively, so that each part of the region is touched by the continuous beam of laser rays or the continuous beams of laser rays before being touched by the focused pulsed laser beam.

13. Method according to Claim 12, characterized in that, in the second step, separate parts of the region are simultaneously subjected to the action of a continuous beam of laser rays or to continuous beams of laser rays and to the action of a focused pulsed laser beam respectively, so that each part of the region is touched by the continuous beam of laser rays or the continuous beams of laser rays for at least 0.05 seconds and preferably at least 0.1 seconds before being touched by the pulsed focused laser beam.

14. Method according to one of Claims 1 to 13, characterized in that the focused pulsed beam of laser rays touches the region at points with a power density of more than 500 W, preferably more than 800 W, per point of impact.

15. Method according to any one of Claims 1 to 14, characterized in that the region is subjected to the action of a focused pulsed beam of laser rays and in that the pulse frequency of the laser beam is adjusted so as to form a series of points of impact in the region of less than 100 µm, preferably of less than 50 µm, in diameter.

16. Method according to any one of Claims 1 to 15, characterized in that, in the first step, the article to be cracked off is subjected to the action of at least one collimated continuous beam of laser rays.

17. Continuous glassware crack-off plant for implementing the method according to any one of Claims 1 to 16, the said plant comprising
* a device comprising a laser for carrying out the crack-off of a glass article forming a cracked-off rim for the article,
* a device comprising a step-by-step drive system for taking the glass articles (1) successively to the crack-off device (10), and
* a system for rotating the glass articles (1) about an axis (A) at least during their crack-off operation,
characterised in that it includes at least two lasers, at least a first (11, 12, 13) being capable of emitting a continuous beam of laser rays touching one or more parts of a continuous region of the said glass article (1) with a power density per unit area of less than 30 W/mm², while at least a second is a pulsed laser (14) capable of emitting a focused pulsed laser beam with a power of less than 250 W.

18. Plant according to Claim 17, characterized in that it includes at least one splitter (16) for splitting the continuous beam of laser rays emanating from a first laser into at least a first and a second beam (F₁, F₂), which are separate from each other, and means (17) for directing the said first and second separate beams (F₁, F₂) respectively towards a first and second treatment region so that an article (1) to be cracked off is treated by the first beam (F₁) in the first region, before being transferred by the step-by-step drive system to the second region where the article treated by the first beam (F₁) is treated by the second beam (F₂).

19. Plant according to Claim 17, characterized in that it includes at least one splitter (16) for splitting the continuous beam of laser rays emanating from a first laser into at least a first and a second beam (F₁, F₂), which are separate from each other, and means (17) for directing the said first and second separate beams respectively towards a first and second treatment region so that an article (1) to be cracked off is treated by the first beam (F₁) in the first region, before being transferred by the step-by-step drive system to the second region where the article treated by the first beam (F₁) is treated by the second beam (F₂) before being treated by the focused pulsed beam of laser rays.

20. Plant according to one of Claims 17 to 19, characterized in that it includes means for adjusting the power of the pulsed laser, the pulse frequency of the pulsed laser ray and the speed of rotation of the glass articles (1) to be cracked off.

21. Plant according to one of Claims 17 to 20, characterized in that it includes a station (18) for cooling the cracked-off glass articles (1).

22. Plant according to one of Claims 17 to 21, characterized in that it includes a station (27) for flatting the cracked-off rim (4) of the glass article (1).

23. Plant according to Claim 22, characterized in that it furthermore includes a station for fire-finishing the cracked-off rim of the glass article.

24. Glass article (1) having a cracked-off rim (4) obtained by the method according to any one of Claims 1 to 16.

## Patentansprüche

1. Verfahren zum Absprengen der Kappe eines Glasgegenstandes (1), bei dem der um eine Achse (A) in Umdrehung versetzte Glasgegenstand (1) in einem ersten Schritt der Einwirkung eines kontinuierlichen Laserstrahls oder von kontinuierlichen Laserstrahlen derart ausgesetzt wird, dass auf dem Gegenstand mit der abzusprengenden Kappe ein von dem oder den kontinuierlichen Laserstrahl(en) getroffener, kontinuierlicher Bereich definiert wird und wobei in einem zweiten Schritt der in dem ersten Schritt der Einwirkung des oder der kontinuierlichen Laserstrahls bzw. -strahlen ausgesetzte Bereich der Einwirkung wenigstens eines fokussierten gepulsten Laserstrahls ausgesetzt wird,
dadurch gekennzeichnet, dass
bei dem ersten Schritt der oder die kontinuierlichen Laserstrahl(en) auf einen Teil oder auf Teile des Bereiches mit einer Leistungsdichte pro Oberflächeneinheit auftreffen, die kleiner ist als 30 W/mm² und dass
bei dem zweiten Schritt, während im wesentlichen einer Umdrehung des Gegenstandes (1) mit der abzusprengenden Kappe oder während wenigstens einer Umdrehung des Gegenstands (1) mit der abzusprengenden Kappe der in dem ersten Schritt der Einwirkung des oder der kontinuierlichen Laserstrahles bzw. -strahlen ausgesetzte Bereich der Einwirkung wenigstens eines gepulsten fokussierten Laserstrahles mit einer Leistung von weniger als 250 W derart ausgesetzt wird, dass eine Reihe voneinander beabstandeter, aufeinander folgender Auftreffpunkte ausgebildet wird, wobei diese Reihe eine im wesentlichen durchgehende Linie in dem jeweiligen Teil bildet und das Absprengen der Kappe im wesentlichen längs dieser Linie erfolgt.

2. Verfahren nach Anspruch 1, dadurch gekennzeichnet, dass die Pulsation des Laserstrahls bei dem zweiten Schritt und/oder die Drehgeschwindigkeit des Gegenstandes (1) mit der abzusprengenden Kappe derart gesteuert werden, dass zwei aufeinander folgende Auftreffpunkte des oder der gepulsten Strahls bzw. der Strahlen in einem gegenseitigen Abstand von weniger als 2 mm, vorzugsweise weniger als 1 mm liegen.

3. Verfahren nach Anspruch 1, dadurch gekennzeichnet, dass die Pulsation des oder der gepulsten Laserstrahls bzw.-strahlen bei dem zweiten Schritt und/oder die Drehgeschwindigkeit des Gegenstandes (1) mit der abzusprengenden Kappe derart gesteuert werden, dass zwei aufeinander folgende Auftreffpunkte des oder der Strahls oder Strahlen auf dem Gegenstand (1) mit der abzusprengenden Kappe in einem gegenseitigen Abstand zwischen 10µm und 1 mm, vorzugsweise zwischen 100µm und 800 µm liegen.

4. Verfahren nach einem der Ansprüche 1 bis 3, dadurch gekennzeichnet, dass bei dem ersten Schritt während wenigstens drei Umdrehungen, vorzugsweise wenigstens fünf Umdrehungen des Gegenstandes (1) mit der abzusprengenden Kappe der Bereich der Einwirkung eines kontinuierlichen Laserstrahls oder von kontinuierlichen Laserstrahlen derart ausgesetzt wird, dass diese Laserstrahlen in dem Bereich in einem Teil oder in Teilen desselben mit einer Leistungsdichte pro Oberflächeneinheit auftreffen die kleiner als 25 W/mm² ist.

5. Verfahren nach einem der Ansprüche 1 bis 4, dadurch gekennzeichnet, dass bei dem ersten Schritt während wenigstens drei Umdrehungen vorzugsweise wenigstens fünf Umdrehungen des Gegenstandes mit der abzusprengenden Kappe, der Bereich der Einwirkung eines kontinuierlichen Laserstrahls oder kontinuierlicher Laserstrahlen derart ausgesetzt wird, dass die Laserstrahlen in dem Bereich in einem Teil oder in Teilen mit einer Leistungsdichte pro Oberflächeneinheit auftreffen, der zwischen 5 W/mm² und 20 W/mm² liegt.

6. Verfahren nach einem der Ansprüche 1 bis 5, dadurch gekennzeichnet, dass bei dem zweiten Schritt die Pulsation des Laserstrahls derart gesteuert wird, dass die Pulsationsfrequenz zwischen 500 Hz und 1500 Hz, insbesondere zwischen 800 Hz und 1200 Hz liegt.

7. Verfahren nach einem der Ansprüche 1 bis 6, dadurch gekennzeichnet, dass bei dem ersten Schritt ein Bereich von 2 mm bis 8 mm Breite der Einwirkung eines Laserstrahls oder von Laserstrahlen ausgesetzt wird.

8. Verfahren nach einem der Ansprüche 1 bis 7, dadurch gekennzeichnet, dass zwischen dem ersten Schritt und dem zweiten Schritt der Bereich während einer vorbestimmten Zeitspanne keiner Einwirkung eines Laserstrahls ausgesetzt wird.

9. Verfahren nach Anspruch 8, dadurch gekennzeichnet, dass zwischen dem ersten Schritt und dem zweiten Schritt der Bereich keiner Einwirkung eines Laserstrahls während einer Zeitspanne ausgesetzt wird, die wenigstens 5% der Zeitspanne entspricht, während der der Bereich bei dem ersten Schritt der Einwirkung eines Laserstrahls oder von Laserstrahlen ausgesetzt ist.

10. Verfahren nach einem der Ansprüche 1 bis 9, dadurch gekennzeichnet, dass bei dem ersten Schritt der Bereich der Einwirkung eines Laserstrahls oder von Laserstrahlen, während wenigstens einer ersten und einer davon verschiedenen zweiten Zeitspanne ausgesetzt wird und dass der Bereich keiner Einwirkung eines Laserstrahls während einer Zwischenzeitspanne zwischen den Zeitspannen der Behandlung mit einem Laserstrahl oder mit Laserstrahlen ausgesetzt wird.

11. Verfahren nach Anspruch 10, dadurch gekennzeichnet, dass die Zwischenzeitspanne wenigstens 5% der ersten Zeitspanne entspricht, während der bei dem ersten Schritt der Bereich der Einwirkung eines Laserstrahls oder von Laserstrahlen ausgesetzt ist.

12. Verfahren nach einem der Ansprüche 1 bis 11, dadurch gekennzeichnet, dass bei dem zweiten Schritt gleichzeitig voneinander verschiedene Teile des Bereiches jeweils der Einwirkung eines kontinuierlichen Laserstrahls oder von kontinuierlichen Laserstrahlen und der Einwirkung eines fokussierten gepulsten Laserstrahls derart ausgesetzt werden, dass jeder Teil des Bereiches von dem kontinuierlichen Laserstrahl oder den kontinuierlichen Laserstrahlen getroffen werden, bevor er von dem gepulsten fokussierten Laserstrahl getroffen wird.

13. Verfahren nach Anspruch 12, dadurch gekennzeichnet, dass bei dem zweiten Schritt voneinander getrennte Teile des Bereiches gleichzeitig jeweils der Einwirkung eines kontinuierlichen Laserstrahls oder von kontinuierlichen Laserstrahlen und der Einwirkung eines gepulsten fokussierten Laserstrahls derart ausgesetzt werden, dass jeder Teil des Bereiches von dem kontinuierlichen Laserstrahl oder den kontinuierlichen Laserstrahlen wenigstens 0,05 Sekunden, vorzugsweise weniger als 1 Sekunde getroffen wird bevor er von dem gepulsten fokussierten Laserstrahl getroffen wird.

14. Verfahren nach einem der Ansprüche 1 bis 13, dadurch gekennzeichnet, dass der gepulste fokussierte Laserstrahl den Bereich an Punkten mit einer Leistungsdichte von mehr als 500 W, vorzugsweise mehr als 800 W pro Auftreffpunkt trifft.

15. Verfahren nach einem der Ansprüche 1 bis 14, dadurch gekennzeichnet, dass der Bereich der Einwirkung eines gepulsten fokussierten Laserstrahls ausgesetzt wird, und dass die Pulsationsfrequenz des Laserstrahls derart gesteuert wird, dass in dem Bereich eine Reihe von Auftreffpunkten von jeweils weniger als 100 µm, vorzugsweise weniger als 50 µm Durchmesser ausgebildet wird.

16. Verfahren nach einem der Ansprüche 1 bis 15, dadurch gekennzeichnet, dass bei dem ersten Schritt der Gegenstand mit der abzusprengenden Kappe der Einwirkung wenigstens eines kontinuierlichen kollimatierten Laserstrahls ausgesetzt wird.

17. Einrichtung zum laufenden Absprengen der Kappen von Glasgegenständen zur Durchführung des Verfahrens nach einem der Ansprüche 1 bis 16, wobei die Einrichtung aufweist:
Eine einen Laser enthaltende Vorrichtung zur Vornahme des Absprengens der Kappe eines Glasgegenstandes, wobei an dem Gegenstand ein abgesprengter Rand ausgebildet wird,
eine Schrittfördereinrichtung, um die Glasgegenstände (1) aufeinander folgend der Vorrichtung zum Absprengen der Kappen (10) zuzuführen und
eine Einrichtung, um die Glasgegenstände (1), wenigstens während des Vorganges des Absprengens der Kappe um eine Achse (A) in Umdrehung zu versetzen,
dadurch gekennzeichnet, dass sie wenigstens zwei Laser aufweist von denen wenigstens ein erster (11, 12, 13) zur Abgabe eines kontinuierlichen Laserstrahls eingerichtet ist, welcher auf einen Teil oder auf Teile eines kontinuierlichen Bereiches des Glasgegenstandes (1) mit einer Leistungsdichte pro Oberflächeneinheit auftrifft, die kleiner ist als 30 W/mm², während wenigstens ein zweiter ein gepulster Laser (14) ist, der dazu eingerichtet ist, einen fokussierten gepulsten Laserstrahl mit einer Leistung von weniger als 250 W abzugeben.

18. Einrichtung nach Anspruch 17, dadurch gekennzeichnet, dass sie wenigstens ein Ablenkmittel (16) aufweist, um den von einem ersten Laser kommenden Laserstrahl in wenigstens einen ersten und einen davon getrennten zweiten Laserstrahl (F1, F2) aufzuteilen und dass sie über Mittel (17) verfügt, um die ersten und zweiten, voneinander getrennten Laserstrahlen (F1, F2) zu einem ersten, bzw. einem zweiten Behandlungsbereich zu leiten, derart, dass ein Gegenstand (1) mit einer abzusprengenden Kappe in dem ersten Bereich durch den ersten Strahl (F1) behandelt wird bevor er von der Transporteinrichtung schrittweise zu dem zweiten Bereich überführt wird, in dem der von dem ersten Strahl (F1) behandelte Gegenstand von dem zweiten Strahl (F2) behandelt wird.

19. Einrichtung nach Anspruch 17, dadurch gekennzeichnet, dass sie wenigstens ein Ablenkmittel (16) aufweist, um den von einem ersten Laser abgegebenen kontinuierlichen Laserstrahl in wenigstens einen ersten und einen davon getrennten zweiten Laserstrahl (F1, F2) aufzuteilen und dass sie über Mittel (17) verfügt, um die ersten und zweiten, voneinander getrennten Laserstrahlen jeweils einem ersten und einem zweiten Behandlungsbereich zuzuleiten, derart, dass ein Gegenstand (1) mit einer abzusprengenden Kappe durch den ersten Strahl (F1) in dem ersten Bereich behandelt wird, bevor er von der Transporteinrichtung schrittweise zu dem zweiten Bereich überführt wird, in dem der von dem ersten Strahl (F1) behandelte Gegenstand von dem zweiten Strahl (F2) behandelt wird, bevor er von dem fokussierten gepulsten Laserstrahl behandelt wird.

20. Einrichtung nach einem der Ansprüche 17 bis 19, dadurch gekennzeichnet, dass sie Mittel zum Regeln der Leistung des gepulsten Laserstrahls, der Pulsationsfrequenz des gepulsten Laserstrahls und der Drehgeschwindigkeit der Glasgegenstände (1) mit abzusprengender Kappe aufweist.

21. Einrichtung nach einem der Ansprüche 17 bis 20, dadurch gekennzeichnet, dass sie eine Kühlstation (18) für die Glasgegenstände (1) mit abgesprengter Kappe aufweist.

22. Einrichtung nach einem der Ansprüche 17 bis 21, dadurch gekennzeichnet, dass sie eine Glattschleifstation (27) für den Rand (4) des Glasgegenstandes (1) von dem die Kappe abgesprengt ist, aufweist.

23. Einrichtung nach Anspruch 22, dadurch gekennzeichnet, dass sie außerdem eine Feuerpolierstation für den Rand des Glasgegenstandes aufweist, von dem die Kappe abgesprengt ist.

24. Glasgegenstand (1) mit einem Rand (4), von dem die Kappe abgesprengt ist, der gemäß dem Verfahren nach einem der Ansprüche 1 bis 16 erhalten wurde.
